# EUROPEAN PATENT APPLICATION

(11) **EP 2 147 850 A2**
(43) Date of publication of application: **27.01.2010**
(21) Application number: 09162356.1
(22) Date of filing: 10.06.2009
(51) Int. Cl.: B62J 9/00

(54) **Mounting system for mounting an object on a gas tank of a motorcycle**

(30) Priority: 22.07.2008 US 177658
(71) Applicant: Loukaides, Len, Hangzhou 310-019 (CN)
(72) Inventor: Loukaides, Len, Hangzhou 310-019 (CN)
(74) Representative: Verhees, Godefridus Josephus Maria

(57) **Abstract**

A mounting system (10) for removably mounting an object (12) on a gas tank (14) of a motorcycle. The mounting system comprises an annular base component (20) and an interlocking component (30). The annular base component (20) is shaped to fit around and be mounted to a cap flange of the gas tank (14). A plurality of first interlocking elements extending inwardly from the annular base component to provide an angled face separated from each other by slots. The interlocking component includes a fastener element for fastening to the object, and an annular wall having a plurality of second interlocking elements shaped to fit through the slots of the annular base component such that a mating face surface engages one of the angled faces.

## Description

### FIELD OF THE INVENTION:

This invention relates generally to mounting systems, and more particularly to a mounting system for removably mounting an object on a gas tank of a motorcycle.

### DESCRIPTION OF RELATED ART:

The following art defines the present state of this field:

Alderman, U.S. 6,974,059, teaches a mounting system designed to mount a luggage piece to the gas tank of a motorcycle. The mounting system includes two separate pieces, a locking ring and a press fit collar. The locking ring includes a push-pin cylinder lock affixed perpendicular to the rings side, which functions to extend the locks retractable lock pin beyond the inner wall of the ring when actuated. Additionally, pins inserted through the wall of the ring protrude beyond the edge of the rings inner surface to the inside and provide the interface attachment point for the press fit collar. Once the collar is press fit inside the locking ring, actuation of the push-pin lock extends the retractable lock pin through the engagement hole in the collar, effectively locking the collar and lock ring together.

Ognissanti et al., U.S. 2006/0118585, teaches a universal support device for mounting motorcycle accessories onto the cap of the motorcycle fuel tank. The support includes a ring nut, supports or pins, fixed to the outer crown of the cap, and fitted with an anchorage for various objects such as, for example, bags, rucksacks, suitcases, and the like.

Jackson, U.S. 4,059,207, teaches a tear-drop shaped article carrying bag adapted to be supported on the flat top of a motorcycle fuel tank. The bag is formed of a closely woven fabric and has a zipper extending about the line of attachment of the top to the two sides and the narrow front end so that when opened the top lifts forward, as a flap, about the line of attachment to the narrow forward end. A transparent map protector is sewn over the top and access to the area between the protector and the top is attained through a slit formed in the top when the bag is opened. The bottom of the bag rests on a resilient pad with a hole for the protruding fuel cap. A pair of straps surround the pad and the tank and have short auxiliary strap sections extending from their sides which pass through D-rings attached to the bottom of the bag to releasably secure the bag to the tank.

Trottier, U.S. 6,868,584, teaches a handle assembly suitable for use by a passenger on a motorcycle. The handle assembly is preferably being secured to the fuel access opening on the fuel tank. The handle assembly includes a base member and handles secured thereto for gripping by the passenger. Similar grips are also taught in Galvagno, U.S. 6,896,279, and Galvagno, U.S. 7,182,359.

The above-described references are hereby incorporated by reference in full.

While the prior art teaches the concept of mounting an object to a gas cap of a motorcycle, it does not teach a mounting system that includes locking elements that enables the mounting system to function quickly and easily, yet still form a secure connection that will not vibrate, shake, wiggle, or accidentally come apart during use.

### SUMMARY OF THE INVENTION

The present invention teaches certain benefits in construction and use which give rise to the objectives described below.

The present invention provides a mounting system for removably mounting an object on a gas tank of a motorcycle. The gas tank has a cap for filling the gas tank, the cap being mounted to the gas tank with fasteners through apertures of a cap flange. The mounting system comprises an annular base component and an interlocking component. The annular base component is shaped to fit around the cap of the gas tank of the motorcycle and over the cap flange, and includes mounting apertures disposed in predetermined positions through the annular base component so as to match up with the apertures of the cap so that the fasteners may be used to mount the annular base component onto the gas tank of the motorcycle; a plurality of first interlocking elements extending inwardly from the annular base component, the first interlocking elements being separated from each other by slots; and an angled face of each of the first interlocking elements facing downwardly towards the cap when the annular base component is mounted on the gas tank of the motorcycle.

The interlocking component is adapted to removably engage the annular base component, and includes a fastener element for fastening the interlocking component to the object to be mounted on the motorcycle; an annular wall extending from a top surface of the interlocking component; a plurality of second interlocking elements extending radially from the annular wall and shaped to fit through the slots of the annular base component; a mating face surface of each of the plurality of second interlocking elements, the mating face surface being shaped to engage one of the angled faces of the second interlocking elements when the plurality of second interlocking elements are positioned through the slots and the interlocking component is rotated with respect to the annular base component to a locked position; and mating ridges in both the angled faces and the mating face surfaces, to frictionally engage each other to interlock the annular base component with the interlocking component when they are rotated to the locked position.

A primary objective of the present invention is to provide a mounting system having advantages not taught by the prior art.

Another objective is to provide a mounting system that is quick and easy to use.

A further objective is to provide a mounting system that provides a secure connection that does not vibrate, shake, wiggle, or accidentally come apart during use.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

The accompanying drawings illustrate the present invention. In such drawings:
FIGURE 1 is an exploded perspective view of a mounting system for removably mounting an object on a gas tank of a motorcycle, the mounting system including an annular base component that is mounted on the gas tank, and an interlocking component that is attached to the object;
FIGURE 2 is a bottom perspective view of the annular base component;
FIGURE 3 is a perspective view of the interlocking component mounted on the object;
FIGURE 4 is a side elevational view of the interlocking component;
FIGURE 5 is a perspective view of the annular base component interlocked with the interlocking component in the locked position;
FIGURE 6 a sectional view thereof taken along line 6-6 in Figure 5; and
FIGURE 7 is a sectional view thereof taken along line 7-7 in Figure 5.

### DETAILED DESCRIPTION OF THE INVENTION

The above-described drawing figures illustrate the invention, a mounting system 10 for removably mounting an object 12 on a gas tank 14 of a motorcycle. The mounting system 10 enables a user to quickly and easily mount the object 12, such as a piece of luggage, a bag, or any other form of container or item, to the motorcycle for easy transport. The mounting system 10 preferably enables a connection that may be made quickly and easily, yet which interlocks in a manner that is secure from movement or vibration, and which will not accidentally come apart during use of the motorcycle. Give the dangers of riding a motorcycle, it is especially important that the object 12 not come loose while the motorcycle is being ridden, as this could cause a potentially fatal accident.

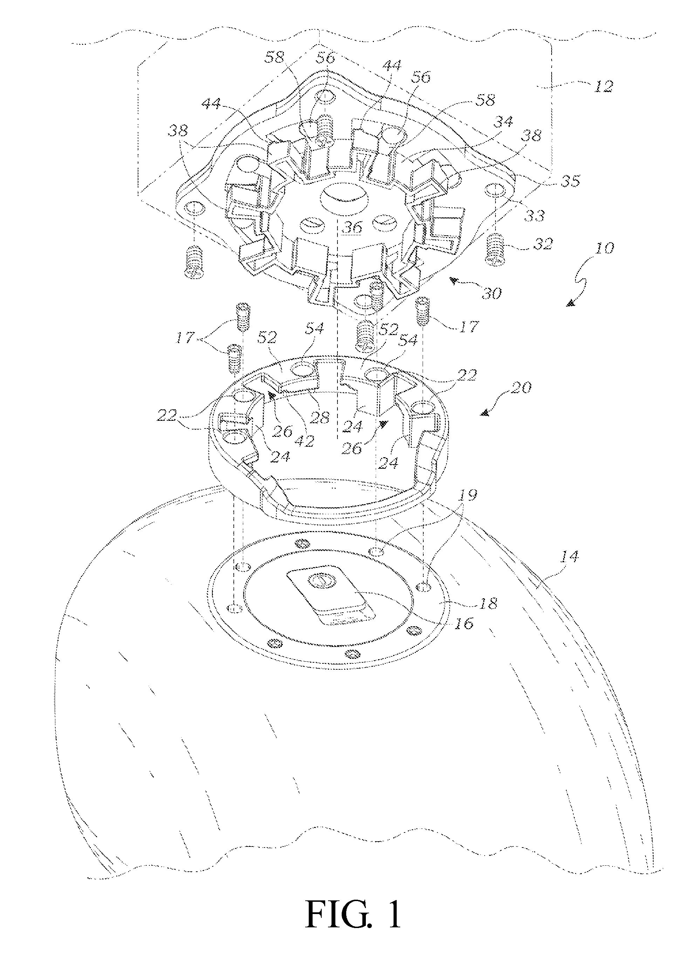

Fig. 1 is an exploded perspective view of the mounting system 10, illustrating an annular base component 20 that is mounted on the gas tank 14, and an interlocking component 30 that is attached to the object 12. As illustrated in Fig. 1, the annular base component 20 and the interlocking component 30 may be removably joined together to removably mount the object 12 on the gas tank 14 of the motorcycle. The mounting system 10 is advantageously able to be used in conjunction with a cap 16 already present on the gas tank 14, without significant modification to the motorcycle. The gas tank 14 includes the cap 16 for filling the gas tank 14. The cap 16 is mounted to the gas tank 14 with fasteners 17 through apertures 19 of a cap flange 18, according to what is the standard construction in the industry. Since the construction of the motorcycle and components are standard and well known in the art, they are not described in greater detail herein.

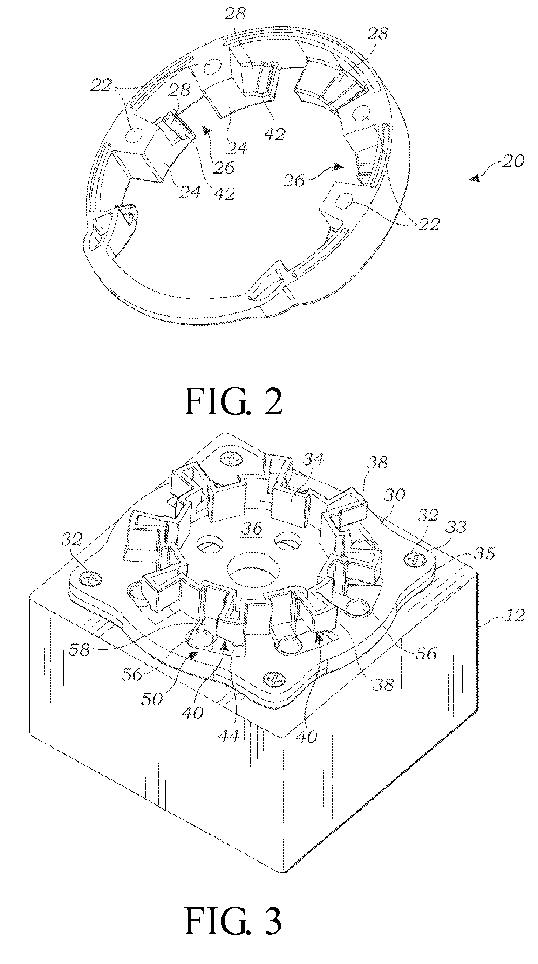

Fig. 2 is a bottom perspective view of the annular base component 20. As illustrated in Figs. 1 and 2, the annular base component 20 is shaped to fit around the cap 16 of the gas tank 14 of the motorcycle and over the cap flange 18. The annular base component 20 includes mounting apertures 22 disposed in predetermined positions through the annular base component 20 so as to match up with the apertures 19 of the cap 16. In this manner, the fasteners 17 may be used to mount the annular base component 20 onto the gas tank 14 of the motorcycle. In some instances, the original fasteners 17 may be used to lock the annular base component 20 onto the cap flange 18. In other embodiments, in which the fasteners 17 are not long enough, they may be replaced with somewhat longer bolts or similar fasteners 17.

To interlock with the interlocking component 30, the annular base component 20 includes a plurality of first interlocking elements 24 that extend inwardly from the annular base component 20. The first interlocking elements 24 are separated from each other by slots 26. An angled face 28 of each of the first interlocking elements 24 facing downwardly towards the cap 16 when the annular base component 20 is mounted on the gas tank 14 of the motorcycle. The angled face 28 may include a mating ridge 42, described in greater detail below, to help ensure a secure connection between the annular base component 20 and the interlocking component 30.

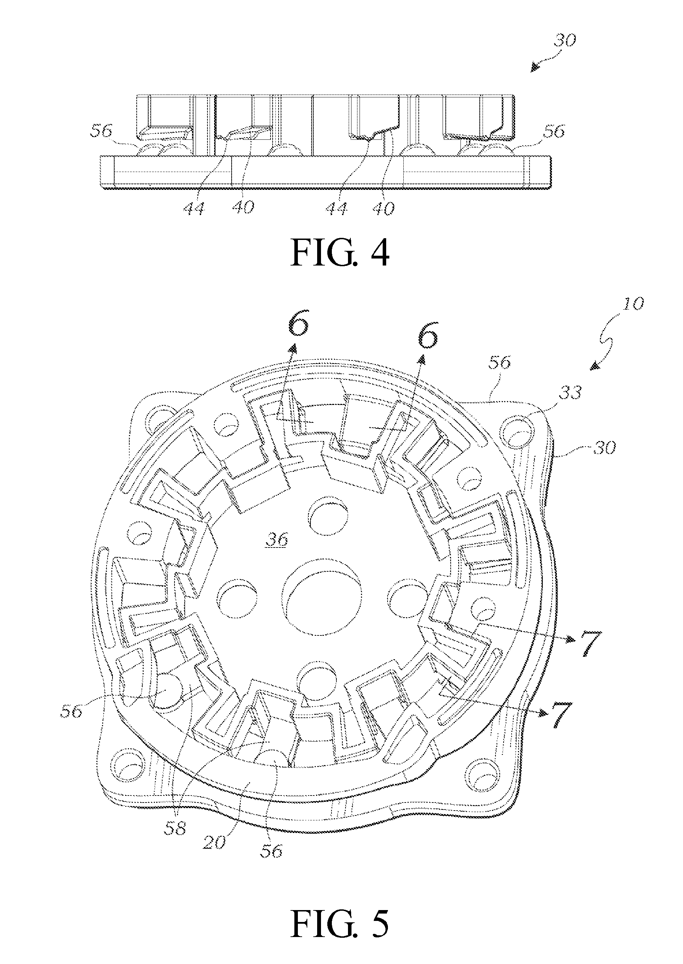

Fig. 3 is a perspective view of the interlocking component 30 mounted on the object 12. Fig. 4 is a side elevational view of the interlocking component 30. As illustrated in Figs. 1, 3, and 4, the interlocking component 30 is adapted to removably engage the annular base component 20. The interlocking component 30 includes a fastener element 32 for fastening the interlocking component 30 to the object 12 to be mounted on the motorcycle. The fastener element 32 may include, for example, screws, bolts or similar elements for locking the object 12 to the interlocking component 30. The fastener element 32 may also include alternative elements, such as an adhesive, or any other similar or equivalent structure or method. In some embodiments, for example, it may be stitched, stapled, or otherwise fastened to the object 12. While a few suitable examples are shown and described, any suitable element or method known in the art may be used to secure the interlocking component 30 to the object 12.

An annular wall 34 extends from a top surface 36 of the interlocking component 30, and a plurality of second interlocking elements 38 extending radially from the annular wall 34. The second interlocking elements 38 are shaped to fit through the slots 26 of the annular base component 20. A mating face surface 40 of each of the plurality of second interlocking elements 38 is shaped to engage one of the angled faces 28 of the second interlocking elements 38 when the plurality of second interlocking elements 38 are positioned through the slots 26 and the interlocking component 30 is rotated with respect to the annular base component 20 to a locked position. It is the physical interlocking of the first and second interlocking elements 24 and 38 that locks the annular base component 20 together with the interlocking component 30. The frictional engagement of the angled faces 28 and the mating face surfaces 40 that helps lock the two together. When the annular base component 20 and the interlocking component 30 are rotated to the locked position, the faces are locked solidly together to prevent any wiggling or vibration between the two components.

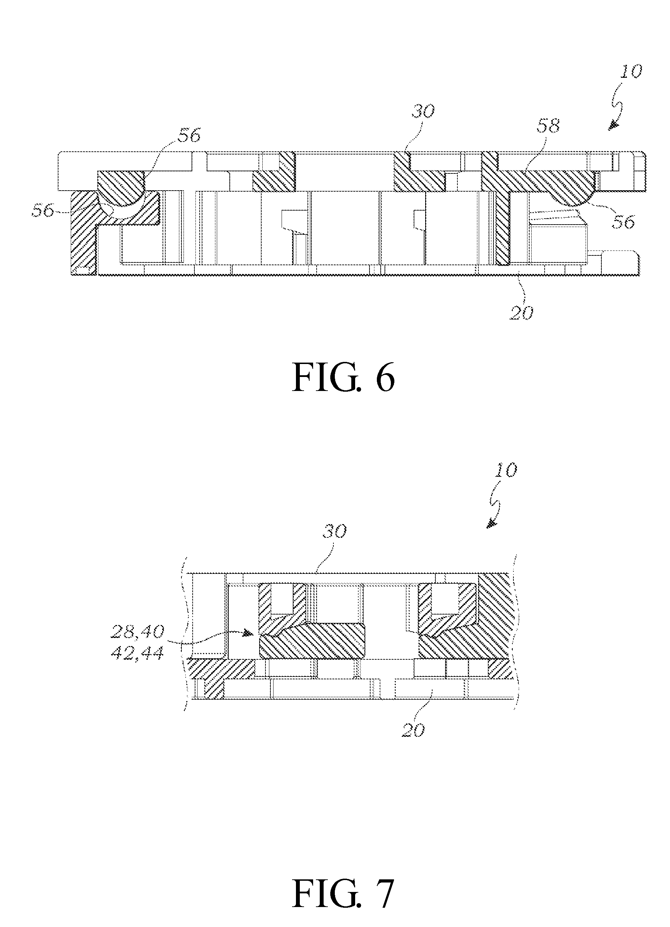

Fig. 5 is a perspective view of the annular base component 20 interlocked with the interlocking component 30 in the locked position. Fig. 6 is a sectional view thereof taken along line 6-6 in Figure 5; and Fig. 7 is a sectional view thereof taken along line 7-7 in Figure 5. As illustrated in Figs. 1 and 5-7, the annular base component 20 and the interlocking component 30 removably engage each other with multiple elements and features to ensure both an easy to use connection, and also a connection that is secure and will not separate while driving the motorcycle, a matter of significant safety concern.

As illustrated in Figs. 1 and 5-7, mating ridges 42 and 44 in both the angled faces 28 and the mating face surfaces 40 frictionally engage each other to interlock the annular base component 20 with the interlocking component 30 when they are rotated to the locked position. The mating ridges 42 and 44 provide additional frictional as well as physical interlocking to prevent rotation away from the locked position, which might result in the accidental separation of the annular base component 20 from the interlocking component 30. The mating ridges 42 and 44 are one element that helps avoid such accidental separation.

As illustrated in Figs. 1 and 3-6, the mounting system 10 may further include a locking feature 50 to further impede accidental separation. The locking feature 50 may include a top surface 52 of each of the first interlocking elements 24, opposite the angled face 28, the top surface 36 having a depression 54. A locking element 56 of the locking feature 50 may be pivotally mounted on a resilient arm 58 of the interlocking component 30 such that the locking element 56 fits into and frictionally engages the depression 54 of the annular base component 20 when the interlocking component 30 is engaged with the annular base component 20 and rotated to the locked position.

In one embodiment, the locking elements 56 may be generally rounded ball-shaped elements that may be formed on the resilient arms 58, which may be arranged radially around the interlocking component 30, although this specific arrangement is not required, and alternative arrangements are also possible. At least some of the depressions 54 may be provided by the mounting apertures 22 of the annular base component 20. In addition, or in the alternative, the depressions 54 may be any form of recess, aperture, slot, or other structure that may receive the locking element 56.

In use, when the annular base component 20 and the interlocking component 30 are rotated with respect to each other to the locking position, the locking elements 56 are biased into one of the depressions 54 by its resilient arm 58, which then resists rotation of the interlocking component 30 with respect to the annular base component 20, thereby preventing unwanted separation of the mounting system 10.

While one embodiment of the invention is described above, it is understood that the inverse construction may also be utilized in the same manner. The above-described terminology is hereby expressly defined to include the inverse, wherein components of the annular base component 20 and the interlocking component 30 are reversed and used to the same effect.

The terminology used in the preceding description should be construed to include not only the words used above, but also similar or equivalent words, and alternative embodiments that would be considered obvious to one skilled in the art given the teachings of the present patent application. Additionally, the words "a," "an," and "one" are defined to include one or more of the referenced item unless specifically stated otherwise. Also, the terms "have," "include," "contain," and similar terms are defined to mean "comprising" unless specifically stated otherwise.

While the invention has been described with reference to at least one preferred embodiment, it is to be clearly understood by those skilled in the art that the invention is not limited thereto. Rather, the scope of the invention is to be interpreted only in conjunction with the appended claims.

## Claims

1. A mounting system for removably mounting an object on a gas tank of a motorcycle, the gas tank having a cap for filling the gas tank, the cap being mounted to the gas tank with fasteners through apertures of a cap flange, the mounting system comprising:
- an annular base component shaped to fit around the cap of the gas tank of the motorcycle and over the cap flange, the annular base component comprising:
- mounting apertures disposed in predetermined positions through the annular base component so as to match up with the apertures of the cap so that the fasteners may be used to mount the annular base component onto the gas tank of the motorcycle;
- a plurality of first interlocking elements extending inwardly from the annular base component, the first interlocking elements being separated from each other by slots; and
- an angled face of each of the first interlocking elements facing downwardly towards the cap when the annular base component is mounted on the gas tank of the motorcycle; and
- an interlocking component adapted to removably engage the annular base component, the interlocking component comprising:
- a fastener element for fastening the interlocking component to the object to be mounted on the motorcycle;
- an annular wall extending from a top surface of the interlocking component;
- a plurality of second interlocking elements extending radially from the annular wall and shaped to fit through the slots of the annular base component; and
- a mating face surface of each of the plurality of second interlocking elements, the mating face surface being shaped to engage one of the angled faces of the second interlocking elements when the plurality of second interlocking elements are positioned through the slots and the interlocking component is rotated with respect to the annular base component to a locked position.

2. The mounting system of claim 1, further comprising mating ridges in both the angled faces and the mating face surfaces, to frictionally engage each other to interlock the annular base component with the interlocking component when they are rotated to the locked position.

3. The mounting system of claim 2, in which the mating ridges are part of the interlocking component.

4. The mounting system of claim 1, further comprising:
- a locking feature comprising:
- a top surface of each of the first interlocking elements, opposite the angled face;
- a depression in the top surface; and
- a locking element pivotally mounted on a resilient arm of the interlocking component such that the locking element fits into and frictionally engages the depression of the annular base component when the interlocking component is engaged with the annular base component and rotated to the locked position.
